(19) **Europäisches Patentamt**
**European Patent Office**
**Office européen des brevets**

(11) **EP 4 456 016 B1**

(12) **EUROPEAN PATENT SPECIFICATION**

(45) Date of publication and mention
of the grant of the patent:
**01.07.2026 Bulletin 2026/27**

(51) International Patent Classification (IPC):
*G06V 20/56* (2022.01) *G06V 10/82* (2022.01)

(52) Cooperative Patent Classification (CPC):
**G06V 20/56; G06V 10/82**

(21) Application number: **23170748.0**

(22) Date of filing: **28.04.2023**

(54) **METHOD FOR PREDICTING TRAJECTORIES OF ROAD USERS**

VERFAHREN ZUR VORHERSAGE VON TRAJEKTORIEN VON VERKEHRSTEILNEHMERN

PROCÉDÉ DE PRÉDICTION DE TRAJECTOIRES D'UTILISATEURS DE ROUTE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**30.10.2024 Bulletin 2024/44**

(73) Proprietor: **Aptiv Technologies AG**
**8200 Schaffhausen (CH)**

(72) Inventors:
• **XU, Suting**
**80539 München (DE)**
• **SCHÄFER, Maximilian**
**42117 Wuppertal (DE)**
• **ZHAO, Kun**
**40235 Duesseldorf (DE)**

(74) Representative: **Manitz Finsterwald**
**Patent- und Rechtsanwaltspartnerschaft mbB**
**Martin-Greif-Straße 1**
**80336 München (DE)**

(56) References cited:
• **NIGAMAA NAYAKANTI ET AL: "Wayformer:
Motion Forecasting via Simple & Efficient
Attention Networks", ARXIV.ORG, CORNELL
UNIVERSITY LIBRARY, 201 OLIN LIBRARY
CORNELL UNIVERSITY ITHACA, NY 14853, 12
July 2022 (2022-07-12), XP091269851**
• **SCHAFER MAXIMILIAN ET AL: "Context-Aware
Scene Prediction Network (CASPNet)", 2022
IEEE 25TH INTERNATIONAL CONFERENCE ON
INTELLIGENT TRANSPORTATION SYSTEMS
(ITSC), IEEE, 8 October 2022 (2022-10-08), pages
3970 - 3977, XP034216325, DOI: 10.1109/
ITSC55140.2022.9921850**
• **MERCAT JEAN ET AL: "Multi-Head Attention for
Multi-Modal Joint Vehicle Motion Forecasting",
2020 IEEE INTERNATIONAL CONFERENCE ON
ROBOTICS AND AUTOMATION (ICRA), IEEE, 31
May 2020 (2020-05-31), pages 9638 - 9644,
XP033826670, DOI: 10.1109/
ICRA40945.2020.9197340**

**Description**

FIELD

The present disclosure relates to a method for predicting respective trajectories of a plurality of road users in an external environment of a vehicle.

BACKGROUND

For autonomous driving and various advanced driver-assistance systems (ADAS), it is an important and challenging task to predict the future motion of road users surrounding a host vehicle. Planning a safe and convenient future trajectory for the host vehicle heavily depends on understanding the traffic scene in an external environment of the host vehicle and on anticipating its dynamics.

In order to predict the future trajectories of surrounding road users precisely, the influence of the static environment like lane and road structure, traffic signs etc. and, in addition, the interactions between the road users need to be considered and modelled. The interactions between road users have different time horizons and various distances which leads to a high complexity. Therefore, the complex interactions between road users are practically not feasible to model with traditional approaches.

The task of predicting the future trajectories of road users surrounding a host vehicle is addressed in M. Schaefer et al.: "Context-Aware Scene Prediction Network (CASPNet)", arXiv: 2201.06933v1, January 18, 2022, by jointly learning and predicting the motion of all road users in a scene surrounding the host vehicle. In this paper, an architecture including a convolutional neural network (CNN) and a recurrent neural network (RNN) is proposed which relies on grid-based input and output data structures. In detail, the neural network comprises a CNN-based trajectory encoder which is suitable for learning correlations between data in a spatial structure. As an input for the trajectory encoder based on the CNN, characteristics of road users are rasterized in a two-dimensional data structure in bird's-eye view in order to model the interactions between the road users via the CNN.

For learning the interactions between the road users, however, the features of different road users have to be covered by the same receptive field of the CNN. The restricted size of such a receptive field for the CNN leads to a limitation of the spatial range in the environment of the host vehicle for which the interactions between road users can be learned. In order to increase the receptive field, multiple CNN-blocks may be stacked, or a kernel size for the CNN may be increased. However, this is accompanied by the disadvantage of increasing computational cost and losing finer details in the interactions at the far range.

Nayakanti, N. et al.: "Wayformer: Motion Forecasting via Simple & Efficient Attention Networks", Arxiv.org, Cornell University Library, 201 Olin Library Cornell University Ithaka NY 14853, July 12, 2022, discloses a method for predicting trajectories of road users by using a machine learning algorithm which includes attention networks for motion forecasting. The algorithm receives a so-called state of the agent including coordinates, velocity and acceleration of road users such that the state of the agent provides a joint vector describing the respective dynamics of each of the road users, wherein different time steps are also considered.

Schäfer, M. et al.: "Context-aware Scene Prediction Network (CASPNet)", 2022 IEEE 25th International Conference on Intelligent Transportation Systems (ITSC), IEEE October 8, 2022, pages 3970 - 3977, discloses a method for predicting trajectories of road users by using a machine learning algorithm having a stacked structure which, however, does not include an encoder comprising an attention algorithm.

Accordingly, there is a need to have a method for predicting trajectories of road users which is able to include interactions of the road users at far distances without increasing the required computational effort.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for predicting respective trajectories of a plurality of road users. According to the method, trajectory characteristics of the road users are determined with respect to a host vehicle via a perception system of the host vehicle, wherein the trajectory characteristics are provided as a joint vector describing respective dynamics of each of the road users for a predefined number of time steps. The joint vector of the trajectory characteristics is encoded via a trajectory encoder of a machine learning algorithm, the trajectory encoder including an attention algorithm which models interactions of the road users. The encoded trajectory characteristics and encoded static environment data obtained for the host vehicle are fused via the machine learning algorithm, wherein the fusing provides fused encoded features. The fused encoded features are decoded via the machine learning algorithm in order to predict the respective trajectory of each of the road users for a predetermined number of future time steps.

The respective trajectories which are to be predicted for the plurality of road users may include trajectories of other vehicles and trajectories of pedestrians as well as a trajectory of the host vehicle. The trajectory characteristics may include a position, a velocity and an object class for each of the respective road users. The position and the velocity of each road user may be provided in bird's eye view, i.e. by two respective components in a two-dimensional coordinate system having its origin at a predefined position at the host vehicle.

Instead of tracking of the respective road users individually, the respective characteristics for the trajectory of the road users are determined for different time steps and represented by the joint vector. The reliability for predicting the future trajectories of the road users may be improved by increasing the number of time steps for which the trajectory characteristics are determined by the perception system.

The joint vector of trajectory characteristics may include two components for the position, two components for the velocity and further components for the class of the respective road user, wherein each of these components is provided for each of road users and for each of the time steps in order to generate the joint vector. The components for the class of the road users may include one component for the target or host vehicle, one component for the class "vehicle", and one component for the class "pedestrian", for example. The object class of the respective road user may be one-hot encoded which means that one of the three components may be set to one whereas the other two components are set to zero for each road user.

The joint vector of the trajectory characteristics differs from a grid map as used e.g. in former methods in that the respective characteristics are not rasterized via a predefined grid including a plurality of cells or pixels in order to cover the environment of the host vehicle. Such a rasterization is usually performed based on the position of the respective road user. Therefore, the range or distance is not limited for acquiring the trajectory characteristics of the road users since no limits of a rasterized map have to be considered.

The machine learning algorithm may be embedded or realized in a processing unit of the host vehicle. The attention algorithm comprised by the machine learning algorithm may include so-called set attention blocks (SAB) which rely on an attention function defined by a pairwise dot product of query and key vectors in order to measure how similar the query and the key vectors are. Each set attention block may include a so-called multi-head attention which may be defined by a concatenation of respective pairwise attention functions, wherein the multi-head attention includes learnable parameters. Moreover, such a said attention block may include feed-forward-layers. The attention algorithm may further include a so-called pooling by multi-head attention (PMA) for aggregating features of the above described set attention blocks (SABs). The respective set attention block (SAB) may model the pairwise interactions between the road users.

The output of the decoding may be provided as grid-based occupancy probabilities for each class of road users. That is, the environment of the host vehicle may be rasterized by a grid including a predefined number of cells or pixels, and for each of these pixels, the decoding step may determine the respective occupancy probability e.g. for the host vehicle, for other vehicles and for pedestrians. Based on such a grid of occupancy probabilities, a predicted trajectory may be derived for each road user.

Due to the joint vector representing the trajectory characteristics, there is no restriction for the spatial range or distance for which the road users may be monitored and for which their interactions may be modeled. In addition, via the joint vector of the trajectory characteristics, data can be directly received from the perception system of the vehicle, i.e. without the need for further transformation of such input data. In other words, no mapping to a grid map is required for encoding the trajectory characteristics of the road users.

Due to this and due to the attention algorithm used by the encoding step, the required memory and the entire computational effort are reduced. Moreover, the output of the attention algorithm may be invariant with respect to the order of the trajectory characteristics within the joint vector.

According to an embodiment, modelling interactions of the road users by the attention algorithm may include: for each of the road users modelling respective interaction with other road users, fusing the modeled interactions for all road users, and concatenating the modeled interaction for each of the road users with the result of fusing the modelled interactions for all road users.

Fusing a modeled interaction may be performed by a pooling operation, e.g. by a pooling via a so-called multi-head attention. Moreover, higher order interactions may be considered in addition to pairwise interactions by providing a stacked structure of the above described set attention blocks (SAB). Due to the concatenating step, the attention algorithm may be able to learn the pairwise interactions and the higher order interactions at the same time.

Modelling the respective interactions may include: providing the trajectory characteristics of the road users, i.e. their joint vector, to a stacked plurality of attention blocks, wherein each attention block may include a multi-head attention algorithm and at least one feed forward layer, and wherein the multi-head attention algorithm may include determining a similarity of queries derived from the trajectory characteristics and predetermined key values. The joint vector of the trajectory characteristics may further be embedded by a multi-layer perception, i.e. before being provided to the stacked plurality of attention blocks. The multi-head attention algorithm and the feed forward layer may require a low computational effort for their implementation. Hence, applying multiple attention blocks to the joint vector describing the dynamics of each of the road users may be used for modelling pair-wise and higher order interactions of the road users.

According to the invention, static environment data is determined via the perception system of the host vehicle and/or a predetermined map. The static environment data is encoded via a map encoder of the machine learning algorithm in order to obtain the encoded static environment data.

Encoding the static environment data via the machine learning algorithm includes encoding the static environment data at a plurality of stacked levels, wherein each level is provided with a predetermined scaling. The trajectory encoder also includes a plurality of stacked levels, wherein each level corresponds to a respective level of the map encoder for encoding the static environment data. Encoding the trajectory characteristics of the road users includes embedding the trajectory characteristics for each level by a different number of model variables in relation to the scaling of the corresponding level of the map encoder for encoding the static environment data.

By this means, the encoding of the trajectory characteristics may be performed on different embedding levels, each of which corresponds to the different scaling which matches to the scaling or resolution of the encoded static environment data on the respective level. For example, if the static environment data is encoded via a respective convolutional neural network (CNN) on each level, the encoding may provide a down-scaling from level to level, and the embedding of the trajectory characteristics may be adapted to the down-scaling. Therefore, the attention algorithm may be able to learn the interactions among the road users at different scales being provided for the respective levels when encoding the static environment data.

The output of the at least one attention algorithm of the trajectory encoder is allocated to respective dynamic grid maps being provided by the map encoder and having different resolutions for each level. As mentioned above, encoding the static environment data may provide a down-scaling from level to level, for example, and the allocation of the encoded trajectory characteristics, i.e. the encoded joint vector after embedding, may also be matched to this down-scaling which corresponds to the different resolutions for each level. This also supports learning the interactions among the road users at different scales.

The allocated output of the at least one attention algorithm of the trajectory encoder is concatenated with the encoded static environment data, i.e. with the output of the map encoder, on each level. In other words, the entire machine learning algorithm may include a pyramidic structure, wherein on each level of such a pyramidic structure a concatenation of the respective encoded data is performed. The output of each level of the pyramidic structure, i.e. of the concatenation, may be provided to the decoding step separately.

The static environment data is encoded iteratively at the stacked levels, and the output of a respective encoding of the static environment data on each level is concatenated with the allocated output of the at least one attention algorithm of the trajectory encoder on the respective level.

Moreover, the static environment data may be provided by a static grid map which includes a rasterization of a region of interest in the environment of the host vehicle, and allocating the output of the at least one attention algorithm to the respective dynamic grid maps which may include a respective rasterization which may be related to the rasterization of the static grid map. The respective rasterization provided e.g. on each level of encoding the static environment data may be used for providing a rasterization on which allocating the output of the attention algorithm may be based. Generally, the static and dynamic grid maps may be realized in two dimensions in bird's eye view.

Encoding the joint vector of the trajectory characteristics which may be performed on each of the stacked levels may also be performed iteratively for each of different time steps for which the respective trajectory characteristics are determined via the perception system of the vehicle. For fusing the trajectory characteristics in the temporal domain, the output of a respective allocation or rasterization step may be provided to respective convolutional gated recurrent units.

The result of decoding the fused features may be provided with respect to the rasterization of the static grid map for a plurality of time steps. The number of time steps may be predefined or variable. Hence, a variable time horizon and a corresponding spatial horizon may be provided for predicting respective trajectories of the road users.

The trajectory characteristics may include a current position, a current velocity and an object class of each road user. In addition, the trajectory characteristics may include a current acceleration, a current bounding box orientation and dimensions of each road user.

In another aspect, the present disclosure is directed at a computer system, said computer system being configured to carry out several or all steps of the computer implemented method described herein. The computer system is further configured to receive trajectory characteristics of road users provided by a perception system of a vehicle, and to receive static environment data provided by the perception system of the vehicle and/or by a predetermined map.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

As used herein, terms like processing unit and module may refer to, be part of, or include an Application Specific Integrated Circuit (ASIC), an electronic circuit, a combinational logic circuit, a field programmable gate array (FPGA), a processor (shared, dedicated, or group) that executes code, other suitable components that provide the described functionality, or a combination of some or all of the above, such as in a system-on-chip. The processing unit may include memory (shared, dedicated, or group) that stores code executed by the processor.

According to an embodiment, the computer system may comprise a machine learning algorithm which may include a respective encoder for encoding the joint vector of the trajectory characteristics and for encoding the static environment data, a concatenation of the encoded trajectory characteristics and the encoded static environment data in order to obtain fused encoded features and a decoder for decoding the fused encoded features in order to predict the respective trajectory of each of the road users for a predetermined number of future time steps.

In another aspect, the present disclosure is directed at a vehicle which includes a perception system and the computer system as described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM); a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically:

Fig. 1    an illustration of a vehicle including a computer system according to the disclosure and of the vehicle's surroundings,

Fig. 2    an illustration of the vehicle's computer system,

Fig. 3    an illustration of a network architecture according to the related art,

Fig. 4    an illustration of details of a trajectory encoder according to the disclosure,

Fig. 5    an illustration of a network architecture according to the disclosure,

Fig. 6    an illustration of results provided by the method according to the disclosure in comparison to results provided by the related art,

Fig. 7    a flow diagram illustrating a method for predicting respective trajectories of a plurality of road users in an external environment of a vehicle according to various embodiments,

Fig. 8    an illustration of a system according to various embodiments, and

Fig. 9    a computer system with a plurality of computer hardware components configured to carry out steps of a computer implemented method as described herein.

DETAILED DESCRIPTION

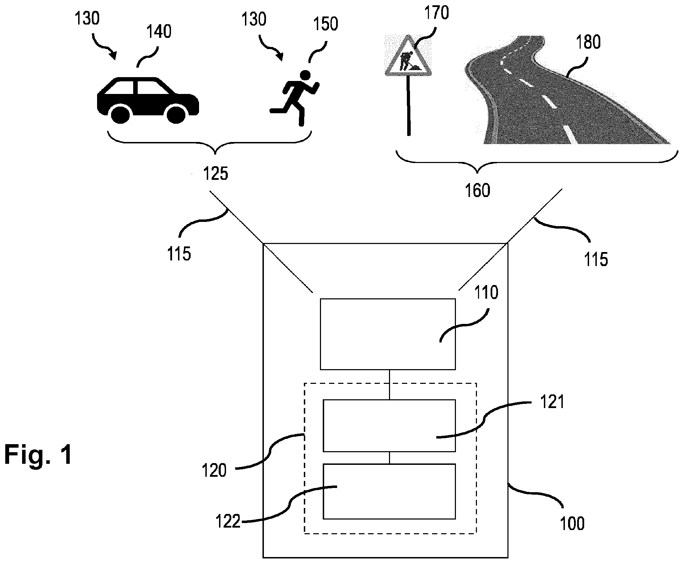

Fig. 1 depicts a schematic illustration of a vehicle 100 and of objects possibly surrounding the vehicle 100 in a traffic scene. The vehicle 100 includes a perception system 110 having an instrumental field of view which is indicated by lines 115. The vehicle 100 further includes a computer system 120 including a processing unit 121 and a data storage system 122 which includes a memory and a database, for example. The processing unit 121 is configured to receive data from the perception system 110 and to store data in the data storage system 122.

The perception system 110 may include a radar system, a LiDAR system and/or one or more cameras in order to monitor the external environment or surroundings of the vehicle 100. Therefore, the perception system 110 is configured to monitor a dynamic context 125 of the vehicle 100 which includes a plurality of road users 130 which are able to move in the external environment of the vehicle 100. The road users 130 may include other vehicles 140 and/or pedestrians 150, for example.

The perception system 110 is also configured to monitor a static context 160 of the vehicle 100. The static context 160 may include traffic signs 170 and lane markings 180, for example.

The perception system 110 is configured to determine trajectory characteristics of the road users 130. The trajectory characteristics include a current position, a current velocity and an object class of each road user 130. The current position and the current velocity are determined by the perception system 110 with respect to the vehicle 100, i.e. with respect to a coordinate system having its origin e.g. at the center of mass of the vehicle 100, its x-axis along a longitudinal direction of the vehicle 100 and its y-axis along a lateral direction of the vehicle 100. Moreover, the perception system 100 determines the trajectory characteristics of the road users 130 for a predetermined number of time steps, e.g. for each 0.5s.

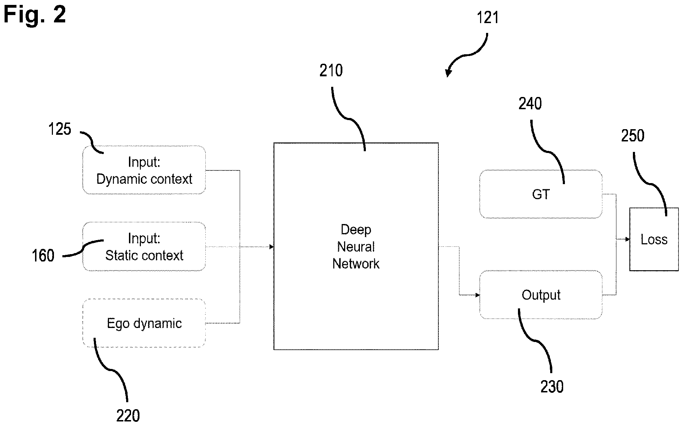

Fig. 2 depicts details of the processing unit 121 which is included in the computer system 120 of the vehicle 100 (see fig. 1). The processing unit 121 includes a deep neural network 210 which is provided with different inputs. The inputs include the dynamic context 125, i.e. the trajectory characteristics as described above for the road users 130, the static context 160 and ego dynamics 220 of the vehicle 100. The deep neural network 210 is used to generate an output 230. When training the deep neural network 210, the output 230 and a ground truth (GT) 240 are provided to a loss function 250 for optimizing the deep neural network 210.

The static context 160 includes static environment data which include the respective positions and the respective dimensions of static entities in the environment of the vehicle 100, e.g. positions and dimensions of the traffic sign 170 and of the lane markings 180, for example. The static context 160, i.e. the static environment data of the vehicle 100, are determined via the perception system 110 of the vehicle 100 and additionally or alternatively from a predetermined map which is available for the surroundings of the vehicle 100.

The static context 160 is represented by one or more of the following:

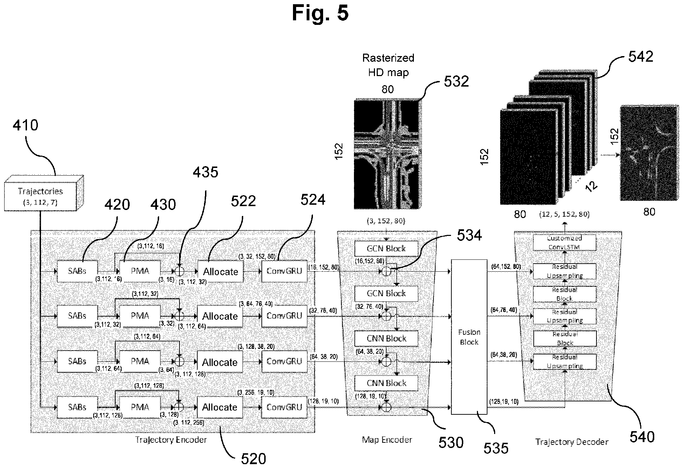

- a rasterized image from a HD (high definition) map (see e.g. a visualization thereof at 532 in Fig. 5), wherein the high definition map covers e.g. accurate positions of the lane marking such that a vehicle is provided with accurate information regarding its surrounding when it can be accurately located in the HD map,
- a drivable area determined via the perception system 110 of the vehicle 100, for example a grid map or image data structure, wherein each pixel of such a map or image represent the drivability of the specific area in the instrumental field of view of the perception system 110,
- a lane/road detection via sensors of the perception system 110, wherein using the detected lane markings, road boundaries, guard rails etc. from the sensor, the perception system 110 may be configured to build a grid map or image like data being similar to a rasterized map in order to describe the static context 160,
- a static occupancy grid map.

The ego dynamics 220 can also be represented as one of the road users 130 and may therefore be included in the dynamic context input. The output 230 provides possible future positions with occupancy probabilities of all road users 130. The output 230 may be represented as a function of time.

The ground truth 240 defines the task of the deep neural network 210. It covers, for example, positions as an occupancy probability and in-grid offsets, and further properties like velocities and accelerations, and/or other regression and classification tasks, for example future positions, velocities, maneuvers etc. of the road users 130 which are monitored within the current traffic scene.

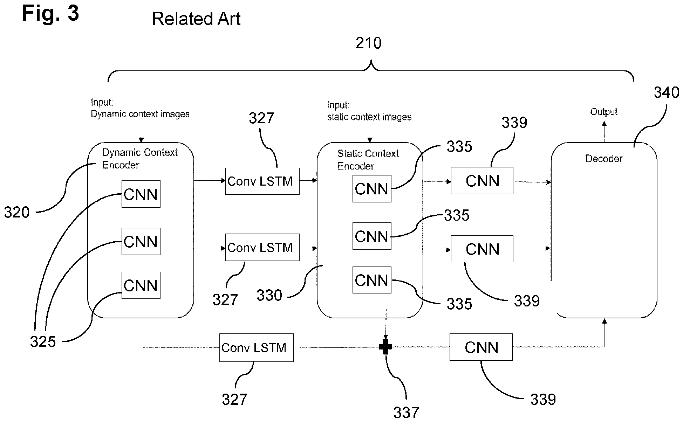

Fig. 3 depicts an illustration of a network architecture for the deep neural network 210 according to the related art. The dynamic context 125, i.e. a plurality of trajectory characteristics of the road users 130, is provided to a dynamic context encoder or trajectory encoder 320. Similarly, the static context 160 is provided as an input to a static context encoder or map encoder 330.

The respective dynamic and static context 125, 160 is provided to the respective encoder in form of images. That is, the trajectory characteristics of the road users 130 and the properties of the static entities in the environment of the vehicle 100 are rasterized or associated with respective elements of a grid map within a predefined region of interest around the vehicle 100. The predefined region of interest of the vehicle 100 is first rasterized as an empty multi-channel image in which each pixel covers a fixed area. For example, the region of interest may cover an area of 80m x 80m in front of the vehicle 100 and may be rasterized into an 80 x 80 pixel image, wherein each pixel represents a square area of 1m x 1m.

For each pixel of the grid map or image, a respective channel is associated with one of the trajectory characteristics or features of the road users 130. Hence, the empty multi-channel image mentioned above and representing the rasterized region of interest close to the vehicle 100 is filled by the trajectory characteristics of the road users 130 which are associated with the respective channel of the pixel.

The trajectory encoder 320 includes stacked layers of respective convolutional neural networks (CNN) 325. Similarly, the static context encoder 330 also includes stacked layers of convolutional neural networks (CNN) 335. CNNs are suitable for learning the correlation among the data under their kernels. Regarding the input, i.e. the trajectory characteristics of the road users 130, such a data correlation can be intuitively understood as possible interactions among road users 130 and the subsequent effects on their behaviors and trajectories. Similarly, the CNNs 335 of the map encoder 330 extract features from the map or static context which are jointly learned with the trajectory prediction.

Since the trajectory characteristics or the dynamic context of the road users 130 are provided as a series of images which are to be processed by the trajectory encoder 330, whose output is also a series of feature maps or images, convolutional recurrent neural networks in form of e.g. a convolutional long short-term memories (ConvLSTM) 327 are applied to learn the motion in the temporal domain, i.e. the future trajectories of the road users 130.

The output of the convolutional long short-term memory (ConvLSTM) receiving the output of the trajectory encoder 320 and the output of the static context encoder 330 are concatenated on each level represented by a respective ConvLSTM, e.g. at 337. Moreover, further layers of convolutional neural networks (CNN) 339 are provided between the static context encoder and the trajectory decoder 340 as well as between the concatenated output of the convolutional long short-term memory receiving the output of the trajectory encoder 320 and the static context encoder 330, and the trajectory decoder 340. The trajectory decoder 340 generates an output image by applying a transposed convolutional network. That is, respective trajectories are provided by the trajectory decoder 340 for each of the road users 130 for a predetermined number of future time steps.

In detail, the output of the trajectory decoder 340 at each prediction time horizon or future time step includes:

- An image, which may be denoted as $I_t$, which represents the predicted position at future time horizon t. $I_t$ has N different channels, denoted as $I_t^n$, wherein each channel presents the prediction for one type of the road users 130, such as pedestrian or vehicle. The pixel value, between [0,1], of the image represents the possibility (or probability) of that pixel being occupied.
- A two-channel image $O_t$, the pixel values of which represent the in-pixel x and y offsets when this pixel is predicted as the future position in $I_t$. This is because the input and output are all rasterized images, each pixel in such images has a fixed and limited resolution. For example, one pixel may represent a 1m x 1m area in real world. To achieve better accuracy, the in-pixel offsets are predicted also as a two-channel image. This in-pixel offsets are valid regardless of the specific type of road users 130. For each $I_t^n$ a specific offset $O_t$ is provided.

Since the trajectory characteristics of the road users 130 are provided to the trajectory encoder 330 in a rasterized form, e.g. as a two-dimensional data structure in bird's-eye view, the trajectory characteristics are able to cover the predefined region of interest as a restricted receptive field only. In other words, the spatial range for considering the interactions between the road users 130 is restricted due to the fact that rasterized images have to be provided to the convolutional neural networks of the trajectory encoder 320 according to the related art. Although different CNN blocks may be stacked, as indicated for the trajectory encoder 320 in fig. 3, or the kernel size may be increased, the spatial range which can be covered by the deep neural network as shown in Fig. 3 will nevertheless be limited, and a higher computational effort may be required for increasing the receptive field. In addition, finer details in interactions may be lost at a far range.

In addition, the output of the perception system 110 cannot be used directly by the trajectory encoder 320 since the trajectory characteristics of the road users 130 have to be rasterized or associated with the pixels of the images in order to be suitable as an input for the trajectory encoder 320. That is, the output of the perception system 110 (see Fig. 1) has to be processed and transformed into respective images for each time step before it can be used by the trajectory encoder 320.

In order to address the above problems, i.e. the limited spatial range for which other road users can be considered and/or the enhanced computational effort, the present disclosure is directed at a network architecture which is based on the structure as shown in Fig. 2 and Fig. 3, but includes a revised trajectory encoder 520 (see Fig. 5) which is generally different from the trajectory encoder 320 which is shown in Fig. 3 and described above.

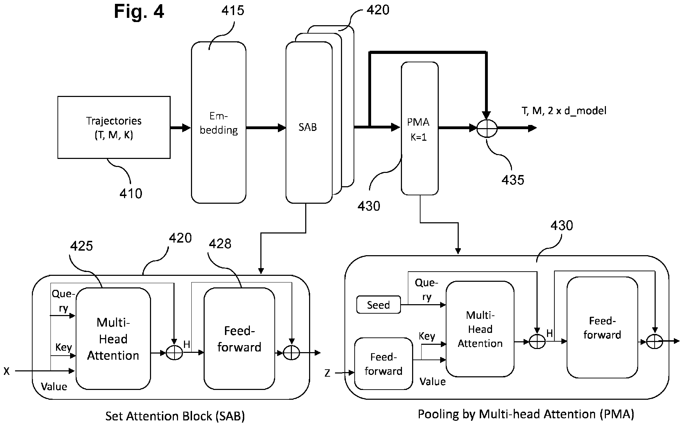

Instead of using a stack structure of convolutional neural networks (CNN) 325 as shown in Fig. 3, the new trajectory encoder 520 as shown in Fig. 5 relies on a stacked structure of set attention blocks (SAB) 420 (see also Fig. 4) in combination with a so-called pooling by multi-head tension (PMA) 430 as proposed by Lee et al. "Set Transformer: A Framework for Attention-based Permutation-Invariant Neural Networks", Proceeding of the 36th International Conference on Machine Learning, Long Beach, California PMLR97, 2019. In addition, the output of the set attention blocks (SAB) 420 is concatenated at 435 with the output of the pooling by multi-head attention (PMA) 430.

Internal details of the revised trajectory encoder 520, mostly regarding the set attention blocks 420 and the pooling by multi-head attention 430, will now be described in context of Fig. 4.

For a given time step or point in time t, the dynamic context 125 is described by a vector $X^t$ which defines a respective set of characteristics or features $F_i$ for each of M road users 130:

$$X^t = \{x_1^t, \ldots, x_M^t\} \in \mathbb{R}^{M \times |F_i|}.$$

$|F_i|$ denotes the total number of characteristics or features for each road user 130. For example, the characteristics $F_i$ include a position $p$, a velocity $v$ which are defined with respect to the vehicle 100, and an object class $c$ for each road user 130. The object class may be "target" (i.e. the host vehicle 100 itself), "vehicle" or "pedestrian", for example.

As input 410 for the trajectory encoder 520, a series of vectors $X^t$ for several time steps is used:

$$X = (X^{t-2}, \ldots, X^t) \in \mathbb{R}^{T \times M \times |F_i|},$$

where $t$ describes the current time step, $T$ the number of input time steps and the characteristics for one road user 130 at time step $t$ is defined as follows:

$$F_i^t = \left( p_u^t, p_v^t, v_u^t, v_v^t, c_{target}^t, c_{vehicle}^t, c_{pedestrian}^t \right).$$

The variables u and v denote two perpendicular directions in bird's-eye view, which is visualized e.g. by high definition maps 532 of the static context 160 as shown in Fig. 5 which will be discussed in detail below. The object class c is one-hot encoded, i.e. for a respective road user 130, one of the components $c_{target}^t, c_{vehicle}^t, c_{pedestrian}^t$ is set to 1 only whereas the two other components are 0. Additional object classes may be added if available, as well as additional characteristics such as acceleration, bounding box orientation and dimensions of a road user.

For the training of the entire network structure and as an example for the present embodiment, the input 410 is provided for M = 112 road users 130 and for $T$ = 3 time steps at 2 $Hz$ using a maximum of 1 $s$ of past information as input. One set of input data 410 includes the characteristics of the M road users 130 for one specific time step. Therefore, interactions between the road users 130 can be learned at every input time step t. In Fig. 4, K denotes the number of characteristics $|F_i|$, i.e. the total number of characteristics or features for each road user 130, which is 7 for the present example.

The sets of input data 410 are first individually embedded at 415 through a multi-layer perceptron (MLP) in order to provide suitable input for the set attention blocks (SAB) 420. A respective set attention block (SAB) 420 is defined as follows:

$$SAB(X) = LN\big(H + rFF(H)\big),$$

wherein $X$ is the set of input elements $X = \{x_1, \ldots, x_m\}$ for the SAB 420 as described above, $LN$ is a layer normalization, $rFF$ is a row-wise feedforward layer 428 and H is defined as follows:

$$H = LN(X + MHSA(X, X, X),$$

wherein $MHSA$ denotes a multi-head self-attention 425.

The multi-head self-attention 425 is based on so-called attention functions defined by a pairwise dot product of query and key vectors in order to measure how similar the query and the key vectors are. A multi-head attention is generated by a concatenation of respective pairwise attention functions, wherein the multi-head attention includes learnable parameters. In the multi-head self-attention 425, the multi-head attention includes learnable parameters is applied to the vector X itself as described above for providing information regarding the interactions of the road users 130.

The SAB 420 is specially designed to be permutation-equivariant. In addition, the input-order of the elements must not change the output. This is important for the present task of encoding the trajectory characteristics of the road users 130 in order to predict their future trajectories, since the order of the sets of trajectory characteristics for the different road users must not make a difference for the result of the prediction. For these reasons, the pooling by multi-head attention (PMA) 430 is required which will be described in detail below.

Hence, the interactions between the road users 130 can be learned via self-attention. There is no restriction in the spatial range of the interactions like for the CNN-based trajectory encoder 320 according to the related art as shown in Fig. 3. By using one SAB 420, the pair-wise interactions of the road users 130 can be learned. To encode higher-order interactions between the road users 130, multiple SABs 420 are stacked as shown in Fig. 4.

Accordingly, to encode high-order interactions between the road users 130, $R$ stacked SABs 420 are used:

$$O = SAB_R(MLP(X)).$$

MLP denotes the multi-layer perceptron for embedding the input 410, as mentioned above. The output features $O$

are aggregated using the PMA block 430 to provide a so-called global scene feature on one path or level as shown in Fig. 5.

For aggregating the characteristics of a set of road users 130, a multi-head attention-based pooling block PMA 430 is applied as follows:

$$PMA_k(Z) = MHSA\big(S, rFF(Z), rFF(Z)\big),$$

wherein Z are the output features of the SABs 420, and S is a set of k learnable seed vectors 432 to query from *rFF(Z)*, *rFF* is again a row-wise feedforward layer 434, and *MHSA* denotes a further multi-head self-attention 436, which are both explained above. Th output of the MHSA is concatenated with the seed vector to provide H as defined above as an input for a further row-wise feedforward layer 438.

On the respective path or level, the output features 0 are concatenated with the global scene features at 435. The final output of one set transformer block is defined as follows:

$$Y(X) = O \oplus PMA(O)$$

where $\oplus$ denotes the concatenation.

Fig. 5 depicts the overall structure of the network including the input 410, i.e. the trajectory characteristics for each of the road users 130, the trajectory encoder 520, a map encoder 530 and a trajectory decoder 540. In the present example, the trajectory characteristics are provided for three different time steps at a temporal interval of 0.5s for 112 road users 130, each of which includes seven features or individual characteristics as defined above in context of Fig. 4, i.e. two components for the respective position and two components for the respective velocity in bird's eye view, and three further components indicating the respective object class for the road user 130. Hence, the input 410 for the trajectory encoder is provided as a vector including 3 x 112 x 7 components which are independent from the rasterization which is applied to the static context as an input for the map encoder 530.

Generally, there are various interactions among the road users 130, e.g. at a near range and/or a far range and among vehicles and/or between vehicles, pedestrians and the static context. Therefore, the network architecture is designed by applying feature pyramidic networks (FPN) which allow features covering different sized receptive fields or scales to flow through the network. Due to this, the network is able to learn complex interactions from real-world traffic scenes.

As an input for the map encoder 530, a rasterized high definition map 532 is provided. That is, in a bird's eye view a given high definition map as defined above for the static context 160 in context of Fig. 2 is respectively rasterized. In the present example, 152 x 80 pixels are used for covering the environment of the host vehicle 100. Semantic features like drivable areas and lane centerlines are encoded to provide the input for the map encoder 532.

The output of the concatenation 435 is rasterized or allocated to a dynamic grid map at 522, i.e. associated with pixels of the dynamic grid map. This is based on the position of the respective road user 130 which is available as part of its trajectory characteristics. The dynamic grip map used at 522 is derived from the images 532 as provided by the static context 160 (see also Fig. 2) in order to be able to view or concatenate the output of the trajectory encoder 520 (see Fig. 5) with the respective level of the map encoder 530 which has rasterized images of the static context of the host vehicle 100 as an input 532. However, the dynamic context has a variable resolution on each level of the network as will be explained below.

The encoding steps which are described above, i.e. as shown in Figs. 4 and 5 and performed on each level of the trajectory encoder 520 by the SABs 420, the PMA 430, the concatenation 435 and the rasterization step 522, are iteratively performed for each of the different time steps for which the respective trajectories of the road users 130 are monitored by the perception system 110 of the vehicle 100. For fusing the trajectory characteristics in the temporal domain, the output of the rasterization step 522 is provided to respective convolutional gated recurrent units (ConvGRU) 524.

When driving fast, a driver needs to observe the road far ahead, whereas a slow walking pedestrian may pay more attention to this close by surroundings. Therefore, the pyramidic structure as feature pyramid networks (FPN) is provided, and all pyramid levels are passed to the trajectory decoder 540. In the map encoder 530, two gabor convolution networks (GCN) are applied to the rasterized high definition map 532 for the first two levels, whereas two further convolutional neural networks (CNN) blocks are provided for the third and fourth level. The use of a GCN improves the resistance to changes in orientation and scale of the input features, i.e. the rasterized high definition map 532. On the different levels of the map encoder, different scaling is provided as indicated by the reduced number of pixels from level to level, i.e. 152 x 80, 76 x 40, 38 x 20 and 19 x 10. Correspondingly, the number of model features increases from level to level, i.e. from 16 to 128.

In correspondence to the different scaling levels of the map encoder, the trajectory encoder includes one respective "set performer block" on each level, wherein each of these set performer blocks includes a set of said attention blocks (SABs) 420 and a pooling by multi-head attention (PMA) 430 together with a respective concatenation 435 (see Fig.

4). That is, each level of the network structure includes one path as shown in the upper half of Fig. 4. For each level, the embedding 415 is performed by a different number of model variables in relation to the scaling of the respective level of the map encoder 530.

For each level or path of the entire network, the output of the concatenation 435 (see also Fig. 4) is allocated as described above, i.e. rasterized or associated with pixels of a dynamic grid map which is derived from the static context 160 as provided by the map encoder 530 on each level. That is, the output features of the concatenation 435 are rasterized on each pyramid level of the network to a series of two-dimensional grids such that the output features of this allocation step 522 are stored at the corresponding pixel position of a particular road user 130. On the different levels, different resolutions r of the considered region H, W in the environment of the host vehicle 100 are used for the rasterized grid maps, wherein H = 152 and W = 80 denote the height and the width in pixel dimensions for the high definition map 532 in the present example. The output of the allocation 522 is represented on respective two-dimensional grids having H/r x W/r elements for each level, wherein each element is provided for three time steps (T = 3) and C channels representing the respective trajectory characteristics or features for each road user 130. By this means, the output of the concatenation 435 is fit to the feature maps of the map encoder 530 on each level. As mentioned above, the ConvGRU-blocks 524 are provided for fusing the outputs of the allocation steps 522 in the temporal domain.

The trajectory encoder 520 includes the same number of levels as the map encoder 530 such that the output of the trajectory encoder 520 is concatenated with the output of the respective GCN block or CNN block representing different scales for the encoded static context. Due to this, the network is able to learn the interactions among different road users 130 at different scales.

On each level of the network, the output of the trajectory encoder 520 is concatenated with the output of the respective GCN-block or CNN-block, respectively, of the map encoder 530. Moreover, the output of this concatenation at 534 is provided to a fusion block 535 which performs a fusion regarding the model parameters on each level.

The output of the fusion block 535 is transferred to the trajectory decoder 540 in which a residual up-sampling is performed to sample the feature maps back up to the defined output resolution. The final output layer is a convolutional long-short term memory (Conv LSTM) which receives an output feature map from the residual up-sampling blocks and iteratively propagates a hidden state. For each iteration, the trajectory decoder outputs a prediction at a predefined time step.

The output of the trajectory decoder 540 is therefore a sequence of grid maps or pictures 542 which have the same resolution as the input high definition map 532 of the map encoder 530. The output grid maps or pictures 542 include the following feature vector for each pixel:

$$F^{t_j} = \left( c_{target}^{t_j}, c_{vehicle}^{t_j}, c_{pedestrian}^{t_j}, \delta_u^{t_j}, \delta_v^{t_j} \right),$$

wherein $t_j$ denotes the future time step number j, c denotes the respective object class and $\delta_u$ as well as $\delta_v$ denote respective offsets in the perpendicular directions u, v with respect to the center of each pixel. Hence, for each pixel the output grid or picture 542 describes the respective occupancy probabilities for one of the three predefined classes target, vehicle, pedestrian at the location of the pixel at the future time step t, and $\delta_u$ as well as $\delta_v$ describe the in-pixel offset.

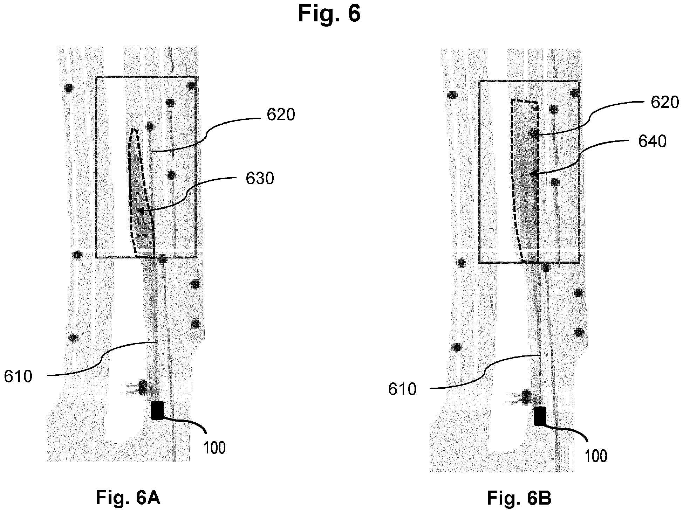

Fig. 6 depicts an example for results provided by the method according to the disclosure. In order to assess the reliability of the method regarding interaction-awareness between road users 130, the same scenario has been considered twice, wherein for Fig. 6A, all road users 130 have been considered as an input for the method, i.e. including the host vehicle 100, whereas for Fig. 6B, all road users 130 have been removed from the input except for the host vehicle 100. In both scenarios, an interaction at a far range with respect to the host vehicle 100 has been covered by the model.

For both scenarios as shown in Fig. 6A and Fig. 6B, a trajectory 610 for the host vehicle 100 is predicted, as well as trajectories for the other road users 130 for which one exemplary trajectory is shown at 620.

In Fig. 6A, the area 630 which is surrounded by the dashed lines depicts the region having the highest occupancy probability for the host vehicle 100 for the predefined future time steps. Due to this area 630, one can recognize that the model correctly predicts that the host vehicle 100 has either to slow down or to perform a lane change to the left in order to avoid conflicts with other road users 130, in particular with the road user for which the trajectory 620 is predicted.

As shown in Fig. 6B, the model predicts a different area 640 for the occupancy probability of the host vehicle 100 being greater than e.g. a predefined threshold for the corresponding future time steps. When considering the greater area 640 in comparison to the occupancy area 630 as shown in Fig. 6A, the model predicts going straight with a higher velocity for the host vehicle 100. This would result to a collision with the road user having the predicted trajectory 620.

In summary, the comparison of Fig. 6A and Fig. 6B shows that the method according to the disclosure correctly models the interactions between the road users 130. This results in multi-modal predictions which are collision-free, i.e. due to predicting either a slowdown of the host vehicle 100 or a lane change to the left for the host vehicle 100.

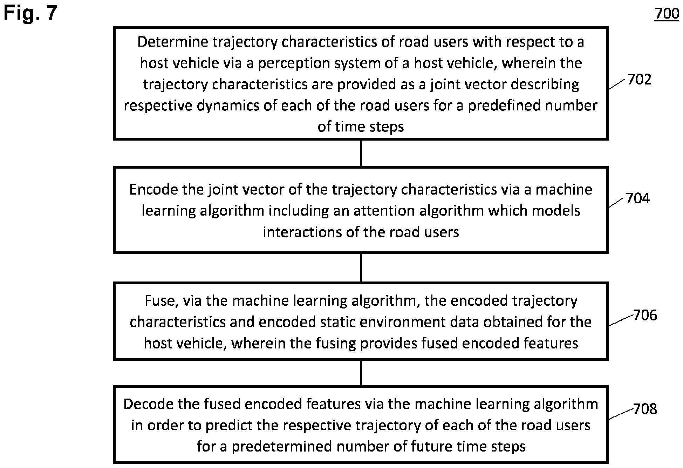

Fig. 7 shows a flow diagram 700 illustrating a method for predicting respective trajectories of a plurality of road users.

At 702, trajectory characteristics of the road users may be determined with respect to a host vehicle via a perception system of the host vehicle, wherein the trajectory characteristics are provided as a joint vector describing respective dynamics of each of the road users for a predefined number of time steps. At 704, the joint vector of the trajectory characteristics may be encoded via a trajectory encoder of a machine learning algorithm, the trajectory encoder including an attention algorithm which may model interactions of the road users. At 706, the encoded trajectory characteristics and encoded static environment data obtained for the host vehicle may be fused via the machine learning algorithm in order, wherein the fusing may provide fused encoded features. At 708, the fused encoded features may be decoded via the machine learning algorithm in order to predict the respective trajectory of each of the road users for a predetermined number of future time steps.

According to various embodiments, modelling interactions of the road users by the attention algorithm may include: for each of the road users, modelling respective interactions with other road users, fusing the modelled interactions for all road users, and concatenating the modelled interactions for each of the road users with the result of fusing the modelled interactions for all road users.

According to various embodiments, modelling the respective interactions may include: providing the trajectory characteristics of the road users to a stacked plurality of attention blocks, wherein each attention block includes a multi-head attention algorithm and at least one feedforward layer, and the multi-head attention algorithm includes determining a similarity of queries derived from the trajectory characteristics and predetermined key values.

According to various embodiments, static environment data may be determined via the perception system of the host vehicle and/or a predetermined map, and the static environment data may be encoded via a map encoder of the machine learning algorithm in order to obtain the encoded static environment data.

According to various embodiments, encoding the static environment data via the machine learning algorithm may include encoding the static environment data at a plurality of stacked levels, each level being provided with a predetermined scaling, and the trajectory encoder may include a plurality of stacked levels, each level corresponding to a respective level of the map encoder for encoding the static environment data. Encoding the trajectory characteristics of the road users may include embedding the trajectory characteristics for each level by a different number of model variables in relation to the scaling of the corresponding level of the map encoder for encoding the static environment data.

According to various embodiments, the output of the at least one attention algorithm of the trajectory encoder may be allocated to respective dynamic grid maps being provided by the map encoder and having different resolutions for each level.

According to various embodiments, the allocated output of the at least one attention algorithm of the trajectory encoder may be concatenated with the encoded static environment data provided by the map encoder on each level.

According to various embodiments, the static environment data may be encoded iteratively at the stacked levels, and an output of a respective encoding of the static environment data on each level may be concatenated with the allocated output of the at least one attention algorithm of the trajectory encoder on the respective level.

According to various embodiments, the static environment data may be provided by a static grid map which may include a rasterization of a region of interest in the environment of the host vehicle, and allocating the output of the at least one attention algorithm to the dynamic grid maps may include a rasterization which may be related to the rasterization of the static grid map.

According to various embodiments, the result of decoding the fused features may be provided with respect to the rasterization of the static grid map for a plurality of time steps.

According to various embodiments, the trajectory characteristics may include a current position, a current velocity and an object class of each road user.

Each of the steps 702, 704, 706, 708 and the further steps described above may be performed by computer hardware components.

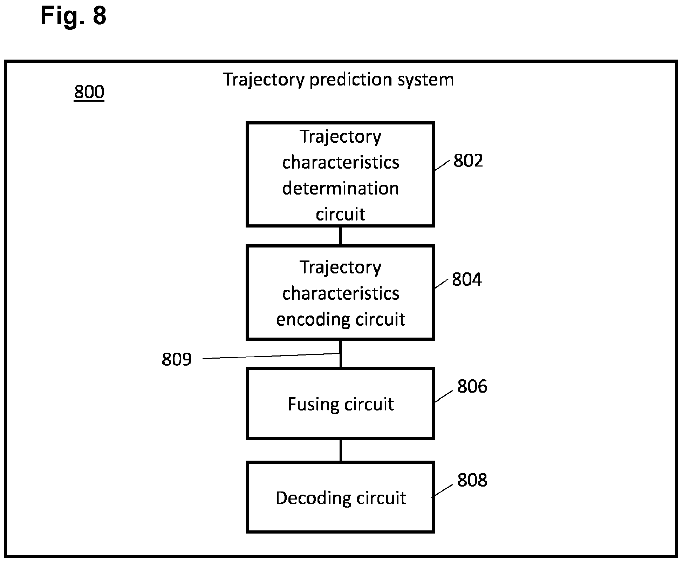

Fig. 8 shows a trajectory prediction system 800 according to various embodiments. The trajectory prediction system 800 may include a trajectory characteristics determination circuit 802, a trajectory characteristics encoding circuit 804, a fusing circuit 806 and a decoding circuit 808.

The trajectory characteristics determination circuit 802 may be configured to determine trajectory characteristics of the road users with respect to a host vehicle via a perception system of the host vehicle, wherein the trajectory characteristics are provided as a joint vector describing respective dynamics of each of the road users for a predefined number of time steps.

The trajectory characteristics encoding circuit 804 may be configured to encode the joint vector of the trajectory characteristics via a machine learning algorithm including an attention algorithm which models interactions of the road users.

The fusing circuit 806 may be configured to fuse, via the machine learning algorithm, the encoded trajectory characteristics and encoded static environment data obtained for the host vehicle, wherein the fusing may provide fused encoded features.

The decoding circuit 808 may be configured to decode the fused encoded features via the machine learning algorithm in order to predict the respective trajectory of each of the road users for a predetermined number of future time steps.

The trajectory characteristics determination circuit 802, the trajectory characteristics encoding circuit 804, fusing circuit 806 and the decoding circuit 808 may be coupled to each other, e.g. via an electrical connection 809, such as e.g. a cable or a computer bus or via any other suitable electrical connection to exchange electrical signals.

A "circuit" may be understood as any kind of a logic implementing entity, which may be special purpose circuitry or a processor executing a program stored in a memory, firmware, or any combination thereof.

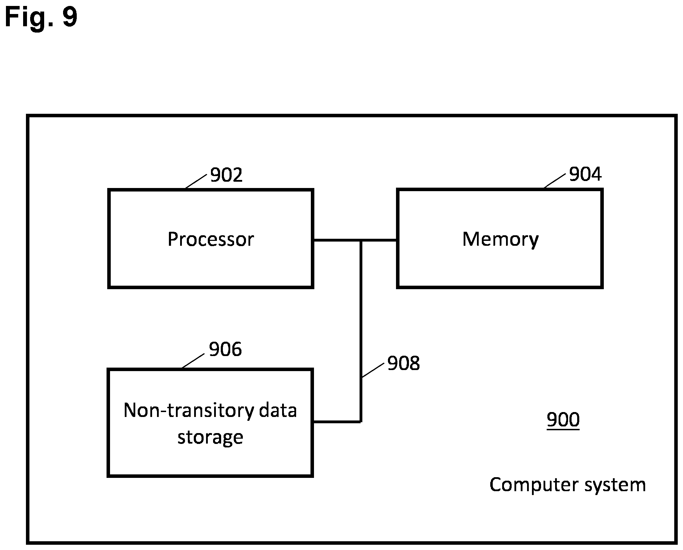

Fig. 9 shows a computer system 900 with a plurality of computer hardware components configured to carry out steps of a computer implemented method for predicting respective trajectories of a plurality of road users according to various embodiments. The computer system 900 may include a processor 902, a memory 904, and a non-transitory data storage 906.

The processor 902 may carry out instructions provided in the memory 904. The non-transitory data storage 906 may store a computer program, including the instructions that may be transferred to the memory 904 and then executed by the processor 902.

The processor 902, the memory 904, and the non-transitory data storage 906 may be coupled with each other, e.g. via an electrical connection 908, such as e.g. a cable or a computer bus or via any other suitable electrical connection to exchange electrical signals.

As such, the processor 902, the memory 904 and the non-transitory data storage 906 may represent the trajectory characteristics determination circuit 802, the trajectory characteristics encoding circuit 804, the fusing circuit 806 and the decoding circuit 808, as described above.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the trajectory prediction system 800 and/or for the computer system 900.

Reference numeral list

| | |
|---|---|
| 100 | vehicle |
| 110 | perception system |
| 115 | field of view |
| 120 | computer system |
| 121 | processing unit |
| 122 | memory, database |
| 125 | dynamic context |
| 130 | road users |
| 140 | vehicle |
| 150 | pedestrian |
| 160 | static context |
| 170 | traffic sign |
| 180 | lane markings |
| 210 | deep neural network |
| 220 | ego dynamic of the host vehicle |
| 230 | output of the deep neural network |
| 240 | ground truth |
| 250 | loss function |
| 320 | dynamic context encoder |
| 325 | convolutional neural network (CNN) |
| 327 | convolutional long-short-term memory (ConvLSTM) |
| 330 | static context encoder |
| 335 | convolutional neural network (CNN) |
| 337 | concatenation |
| 339 | convolutional neural network (CNN) |
| 340 | decoder |
| 410 | input for the trajectory encoder |
| 415 | embedding layers |
| 420 | set attention block (SAB) |

| 425 | multi-head attention |
| 428 | feed forward layer |
| 430 | pooling by multi-head attention (PMA) |
| 435 | concatenation |
| 520 | trajectory encoder |
| 522 | allocation block |
| 424 | convolutional gated recurrent unit (ConvGRU) |
| 530 | map encoder |
| 532 | rasterized high definition map |
| 534 | concatenation |
| 535 | fusion block |
| 540 | trajectory decoder |
| 542 | sequence of output grid maps or pictures |
| 610 | predicted trajectory of the host vehicle |
| 620 | predicted trajectory of another road user |
| 630 | area representing a high occupancy probability |
| 640 | area representing a high occupancy probability |
| 700 | flow diagram illustrating a method for predicting respective trajectories of a plurality of road users |
| 702 | step of determining trajectory characteristics of the road users with respect to a host vehicle via a perception system of the host vehicle, wherein the trajectory characteristics are provided as a joint vector describing respective dynamics of each of the road users for a predefined number of time steps |
| 704 | step of encoding the joint vector of the trajectory characteristics via a machine learning algorithm including an attention algorithm which models interactions of the road users |
| 706 | step of fusing, via the machine learning algorithm, the encoded trajectory characteristics and encoded static environment data obtained for the host vehicle, wherein the fusing provides fused encoded features |
| 708 | step of decoding the fused encoded features via the machine learning algorithm in order to predict the respective trajectory of each of the road users for a predetermined number of future time steps |
| | |
| 800 | trajectory prediction system |
| 802 | trajectory characteristics determination circuit |
| 804 | trajectory characteristics encoding circuit |
| 806 | fusing circuit |
| 808 | the decoding circuit |
| 809 | connection |
| | |
| 900 | computer system according to various embodiments |
| 902 | processor |
| 904 | memory |
| 906 | non-transitory data storage |
| 908 | connection |

## Claims

1. Computer implemented method for predicting respective trajectories (610, 620) of a plurality of road users (130),

   the method comprising:

   determining trajectory characteristics of the road users (130) with respect to a host vehicle (100) via a perception system (110) of the host vehicle (100), wherein the trajectory characteristics are provided as a joint vector (410) describing respective dynamics of each of the road users (130) for a predefined number of time steps;
   encoding the joint vector (410) of the trajectory characteristics via a trajectory encoder (520) of a machine learning algorithm, the trajectory encoder (520) including an attention algorithm (420, 430, 435) which models interactions of the road users (130);
   fusing, via the machine learning algorithm, the encoded trajectory characteristics and encoded static environment data obtained for the host vehicle (100), wherein the fusing provides fused encoded features; and
   decoding the fused encoded features via the machine learning algorithm in order to predict the respective trajectory (610, 620) of each of the road users (130) for a predetermined number of future time steps,

wherein

static environment data is determined via the perception system (110) of the host vehicle (100) and/or a predetermined map, and
the static environment data is encoded via a map encoder (530) of the machine learning algorithm in order to obtain the encoded static environment data, **characterized in that**
encoding the static environment data includes encoding the static environment data at a plurality of stacked levels, each level being provided with a predetermined scaling having a decreasing number of pixels and an increasing number of model features from level to level,
the static environment data is encoded iteratively at the stacked levels,
the trajectory encoder (520) includes a plurality of stacked levels, each level corresponding to a respective level of the map encoder (530) for encoding the static environment data,
encoding the trajectory characteristics of the road users (130) via the trajectory encoder (520) includes embedding the trajectory characteristics for each level by a different number of model variables in relation to the scaling of the corresponding level of the map encoder (530),
the output of the at least one attention algorithm (420, 430, 435) of the trajectory encoder (520) is allocated by rasterizing the output with pixels of respective dynamic grid maps being provided by the map encoder (530) on each level and having different resolutions for each level, and
the allocated output of the trajectory encoder (520) is concatenated with the output of the map encoder (530) on each level.

2. Method according to claim 1, wherein
modelling interactions of the road users (130) by the attention algorithm includes:

for each of the road users (130), modelling respective interactions with other road users (130),
fusing the modelled interactions for all road users (130), and
concatenating (435) the modelled interactions for each of the road users (130) with the result of fusing the modelled interactions for all road users (130).

3. Method according to claim 2, wherein
modelling the respective interactions includes:

providing the trajectory characteristics of the road users (130) to a stacked plurality of attention blocks (420), wherein each attention block (420) includes a multi-head attention algorithm (425) and at least one feedforward layer (428), and
the multi-head attention algorithm (425) includes determining a similarity of queries derived from the trajectory characteristics and predetermined key values.

4. Method according to anyone of claims 1 to 3, wherein

the static environment data is provided by a static grid map (532) which includes a rasterization of a region of interest in the environment of the host vehicle (100), and
allocating the output of the at least one attention algorithm to the respective dynamic grid maps includes a respective rasterization which is related to the rasterization of the static grid map (532).

5. Method according to claim 4, wherein
the result of decoding the fused features is provided with respect to the rasterization of the static grid map (532) for a plurality of time steps.

6. Method according to any one of claims 1 to 5, wherein
the trajectory characteristics include a current position, a current velocity and an object class of each road user (130).

7. Computer system (900), the computer system (900) being configured:

to receive trajectory characteristics of road users (130) provided by a perception system (110) of a vehicle (100),
to receive static environment data provided by the perception system (110) of the vehicle (100) and/or by a predetermined map, and
to carry out the computer implemented method of at least one of claims 1 to 6.

8. Vehicle (100) including a perception (110) system and the computer system (900) of claim 7.

9. Non-transitory computer readable medium comprising instructions for carrying out the computer implemented method of at least one of claims 1 to 6.

**Patentansprüche**

1. Computerimplementiertes Verfahren zum Vorhersagen jeweiliger Trajektorien (610, 620) einer Vielzahl von Verkehrsteilnehmern (130),

   wobei das Verfahren umfasst:

   Ermitteln von Trajektorieeigenschaften der Verkehrsteilnehmer (130) in Bezug auf ein Host-Fahrzeug (100) über ein Wahrnehmungssystem (110) des Host-Fahrzeugs (100), wobei die Trajektorieeigenschaften als ein gemeinsamer Vektor (410) bereitgestellt werden, der die jeweilige Dynamik jedes der Verkehrsteilnehmer (130) für eine vordefinierte Anzahl von Zeitschritten beschreibt;
   Codieren des gemeinsamen Vektors (410) der Trajektorieeigenschaften über einen Trajektoriecodierer (520) eines Algorithmus eines maschinellen Lernens, wobei der Trajektoriecodierer (520) einen Aufmerksamkeitsalgorithmus (420, 430, 435) umfasst, der Interaktionen der Verkehrsteilnehmer (130) modelliert;
   Vereinigen der codierten Trajektorieeigenschaften und codierter Daten einer statischen Umgebung, die für das Host-Fahrzeug (100) erhalten werden, über den Algorithmus eines maschinellen Lernens, wobei das Vereinigen vereinigte codierte Merkmale bereitstellt; und
   Decodieren der vereinigten codierten Merkmale über den Algorithmus eines maschinellen Lernens, um die jeweilige Trajektorie (610, 620) jedes der Verkehrsteilnehmer (130) für eine vorbestimmte Anzahl zukünftiger Zeitschritte vorherzusagen,

   wobei

   Daten einer statischen Umgebung über das Wahrnehmungssystem (110) des Host-Fahrzeugs (100) und/oder eine vorbestimmte Karte ermittelt werden, und
   die Daten einer statischen Umgebung über einen Kartencodierer (530) des Algorithmus eines maschinellen Lernens codiert werden, um die codierten Daten einer statischen Umgebung zu erhalten,
   **dadurch gekennzeichnet, dass**
   das Codieren der Daten einer statischen Umgebung das Codieren der Daten einer statischen Umgebung auf einer Vielzahl von gestapelten Ebenen umfasst, wobei jede Ebene mit einer vorbestimmten Skalierung versehen ist, die eine abnehmende Anzahl von Pixeln und eine zunehmende Anzahl von Modellmerkmalen von Ebene zu Ebene aufweist,
   die Daten einer statischen Umgebung auf den gestapelten Ebenen iterativ codiert werden,
   der Trajektoriecodierer (520) eine Vielzahl von gestapelten Ebenen umfasst, wobei jede Ebene einer jeweiligen Ebene des Kartencodierers (530) zum Codieren der Daten einer statischen Umgebung entspricht,
   das Codieren der Trajektorieeigenschaften der Verkehrsteilnehmer (130) über den Trajektoriecodierer (520) das Einbetten der Trajektorieeigenschaften für jede Ebene durch eine unterschiedliche Anzahl von Modellvariablen in Relation zu der Skalierung der entsprechenden Ebene des Kartencodierers (530) umfasst,
   die Ausgabe des zumindest einen Aufmerksamkeitsalgorithmus (420, 430, 435) des Trajektoriecodierers (520) durch Rastern der Ausgabe mit Pixeln jeweiliger dynamischer Gitterkarten zugewiesen wird, die durch den Kartencodierer (530) auf jeder Ebene bereitgestellt werden und unterschiedliche Auflösungen für jede Ebene aufweisen, und
   die zugewiesene Ausgabe des Trajektoriecodierers (520) auf jeder Ebene mit der Ausgabe des Kartencodierers (530) verknüpft wird.

2. Verfahren nach Anspruch 1, wobei
   das Modellieren von Interaktionen der Verkehrsteilnehmer (130) durch den Aufmerksamkeitsalgorithmus umfasst, dass:

für jeden der Verkehrsteilnehmer (130) jeweilige Interaktionen mit anderen Verkehrsteilnehmern (130) modelliert werden,
die modellierten Interaktionen für alle Verkehrsteilnehmer (130) vereinigt werden, und
die modellierten Interaktionen für jeden der Verkehrsteilnehmer (130) mit dem Ergebnis des Vereinigens der modellierten Interaktionen für alle Verkehrsteilnehmer (130) verknüpft werden (435).

3. Verfahren nach Anspruch 2, wobei
das Modellieren der jeweiligen Interaktionen umfasst, dass:

die Trajektorieeigenschaften der Verkehrsteilnehmer (130) einer gestapelten Vielzahl von Aufmerksamkeitsblöcken (420) bereitgestellt werden,
wobei jeder Aufmerksamkeitsblock (420) einen Mehrkopf-Aufmerksamkeitsalgorithmus (425) und zumindest eine Vorwärtskopplungsschicht (428) umfasst, und
der Mehrkopf-Aufmerksamkeitsalgorithmus (425) das Ermitteln einer Ähnlichkeit von Abfragen umfasst, die von den Trajektorieeigenschaften und vorbestimmten Schlüsselwerten abgeleitet sind.

4. Verfahren nach einem der Ansprüche 1 bis 3, wobei

die Daten einer statischen Umgebung durch eine statische Gitterkarte (532) bereitgestellt werden, die eine Rasterung einer Region von Interesse in der Umgebung des Host-Fahrzeugs (100) umfasst, und
das Zuweisen der Ausgabe des zumindest einen Aufmerksamkeitsalgorithmus zu den jeweiligen dynamischen Gitterkarten eine jeweilige Rasterung umfasst, die mit der Rasterung der statischen Gitterkarte (532) in Beziehung steht.

5. Verfahren nach Anspruch 4, wobei
das Ergebnis des Decodierens der vereinigten Merkmale in Bezug auf die Rasterung der statischen Gitterkarte (532) für eine Vielzahl von Zeitschritten bereitgestellt wird.

6. Verfahren nach einem der Ansprüche 1 bis 5, wobei die Trajektorieeigenschaften eine aktuelle Position, eine aktuelle Geschwindigkeit und eine Objektklasse jedes Verkehrsteilnehmers (130) umfassen.

7. Computersystem (900), wobei das Computersystem (900) ausgestaltet ist, um:

Trajektorieeigenschaften von Verkehrsteilnehmern (130) zu empfangen, die durch ein Wahrnehmungssystem (110) eines Fahrzeugs (100) bereitgestellt werden,
Daten einer statischen Umgebung zu empfangen, die durch das Wahrnehmungssystem (110) des Fahrzeugs (100) und/oder durch eine vorbestimmte Karte bereitgestellt werden, und
das computerimplementierte Verfahren nach zumindest einem der Ansprüche 1 bis 6 auszuführen.

8. Fahrzeug (100), das ein Wahrnehmungssystem (110) und das Computersystem (900) nach Anspruch 7 umfasst.

9. Nicht-transitorisches durch einen Computer lesbares Medium, das Anweisungen zum Ausführen des computerimplementierten Verfahrens nach zumindest einem der Ansprüche 1 bis 6 umfasst.

**Revendications**

1. Procédé mis en œuvre par ordinateur pour prédire les trajectoires respectives (610, 620) d'une pluralité d'usagers de la route (130),

le procédé comprenant:

la détermination des caractéristiques de trajectoire des usagers de la route (130) par rapport à un véhicule hôte (100) via un système de perception (110) du véhicule hôte (100), les caractéristiques de trajectoire étant fournies sous la forme d'un vecteur conjoint (410) décrivant la dynamique respective de chacun des usagers de la route (130) pour un nombre prédéfini d'étapes temporelles;
le codage du vecteur conjoint (410) des caractéristiques de trajectoire via un codeur de trajectoire (520) d'un algorithme d'apprentissage automatique, le codeur de trajectoire (520) comportant un algorithme d'attention (420, 430, 435) qui modélise les interactions des usagers de la route (130);

fusionner, via l'algorithme d'apprentissage automatique, les caractéristiques de trajectoire codées et les données d'environnement statique codées obtenues pour le véhicule hôte (100), la fusion fournissant des attributs codés fusionnés; et

décoder les attributs codés fusionnés via l'algorithme d'apprentissage automatique afin de prédire la trajectoire respective (610, 620) de chacun des usagers de la route (130) pour un nombre prédéterminé d'étapes temporelles futures,

dans lequel

les données d'environnement statique sont déterminées via le système de perception (110) du véhicule hôte (100) et/ou une carte prédéterminée, et

les données d'environnement statique sont codées via un codeur de carte (530) de l'algorithme d'apprentissage automatique afin d'obtenir les données d'environnement statique codées,

**caractérisé en ce que**

le codage des données d'environnement statique comprend le codage des données d'environnement statique à plusieurs niveaux empilés, chaque niveau étant muni d'une échelle prédéterminée présentant un nombre de pixels décroissant et un nombre d'attributs du modèle croissant d'un niveau à l'autre,

les données d'environnement statique sont codées de manière itérative aux niveaux empilés,

le codeur de trajectoire (520) comprend une pluralité de niveaux empilés, chaque niveau correspondant à un niveau respectif du codeur de carte (530) pour le codage des données d'environnement statique,

le codage des caractéristiques de trajectoire des usagers de la route (130) via le codeur de trajectoire (520) comprend l'incorporation des caractéristiques de trajectoire pour chaque niveau par un nombre différent de variables de modèle en fonction de la mise à l'échelle du niveau correspondant du codeur de carte (530),

la sortie d'au moins un algorithme d'attention (420, 430, 435) du codeur de trajectoire (520) est attribuée en rastérisant la sortie avec des pixels de cartes maillées dynamiques respectives fournies par le codeur de carte (530) à chaque niveau et ayant des résolutions différentes pour chaque niveau, et

la sortie attribuée du codeur de trajectoire (520) est concaténée avec la sortie du codeur de carte (530) à chaque niveau.

2. Procédé selon la revendication 1, dans lequel
   la modélisation des interactions des usagers de la route (130) par l'algorithme d'attention comprend:

   pour chacun des usagers de la route (130), la modélisation des interactions respectives avec les autres usagers de la route (130),

   la fusion des interactions modélisées pour tous les usagers de la route (130), et

   la concaténation (435) des interactions modélisées pour chacun des usagers de la route (130) avec le résultat de la fusion des interactions modélisées pour tous les usagers de la route (130).

3. Procédé selon la revendication 2, dans lequel
   la modélisation des interactions respectives comprend:

   fournir les caractéristiques de trajectoire des usagers de la route (130) à une pluralité empilée de blocs d'attention (420),

   chaque bloc d'attention (420) comportant un algorithme d'attention multi-têtes (425) et au moins une couche de propagation directe (428), et

   l'algorithme d'attention multi-têtes (425) comprend la détermination d'une similarité entre des requêtes dérivées des caractéristiques de trajectoire et des valeurs clés prédéterminées.

4. Procédé selon l'une quelconque des revendications 1 à 3, dans lequel

   les données d'environnement statique sont fournies par une carte maillée statique (532) qui comprend une rastérisation d'une région d'intérêt dans l'environnement du véhicule hôte (100), et

   l'attribution de la sortie dudit au moins un algorithme d'attention aux cartes maillées dynamiques respectives comprend une rastérisation respective qui est liée à la rastérisation de la carte maillée statique (532).

5. Procédé selon la revendication 4, dans lequel
   le résultat du décodage des attributs fusionnés est fourni par rapport à la rastérisation de la carte maillée statique (532) pour une pluralité d'étapes temporelles.

6. Procédé selon l'une quelconque des revendications 1 à 5, dans lequel les caractéristiques de trajectoire comprennent une position actuelle, une vitesse actuelle et une classe d'objet de chaque usager de la route (130).

7. Système informatique (900), le système informatique (900) étant configuré:

   pour recevoir les caractéristiques de trajectoire des usagers de la route (130) fournies par un système de perception (110) d'un véhicule (100),
   pour recevoir des données d'environnement statique fournies par le système de perception (110) du véhicule (100) et/ou par une carte prédéterminée, et
   pour exécuter le procédé mis en œuvre par ordinateur selon au moins l'une des revendications 1 à 6.

8. Véhicule (100) comportant un système de perception (110) et le système informatique (900) de la revendication 7.

9. Support non transitoire lisible par ordinateur comprenant des instructions pour exécuter le procédé mis en œuvre par ordinateur selon au moins l'une des revendications 1 à 6.

Fig. 1

**Fig. 2**

**Fig. 3**    Related Art

## Fig. 4

Set Attention Block (SAB)

Pooling by Multi-head Attention (PMA)

# Fig. 5

# Fig. 6

**Fig. 6A**

**Fig. 6B**

**Fig. 7**                                                                        700

| Determine trajectory characteristics of road users with respect to a host vehicle via a perception system of a host vehicle, wherein the trajectory characteristics are provided as a joint vector describing respective dynamics of each of the road users for a predefined number of time steps | 702 |

| Encode the joint vector of the trajectory characteristics via a machine learning algorithm including an attention algorithm which models interactions of the road users | 704 |

| Fuse, via the machine learning algorithm, the encoded trajectory characteristics and encoded static environment data obtained for the host vehicle, wherein the fusing provides fused encoded features | 706 |

| Decode the fused encoded features via the machine learning algorithm in order to predict the respective trajectory of each of the road users for a predetermined number of future time steps | 708 |

# Fig. 8

**Trajectory prediction system**

**800**

Trajectory
characteristics
determination
circuit — 802

Trajectory
characteristics
encoding circuit — 804

809 —

Fusing circuit — 806

Decoding circuit — 808

# Fig. 9

```
                                    900
   ┌────────────────────────────────────────────────────┐
   │                                                    │
   │   ╱902                        ╱904                 │
   │  ┌──────────────┐           ┌──────────────┐       │
   │  │              │           │              │       │
   │  │  Processor   │───────────│   Memory     │       │
   │  │              │           │              │       │
   │  └──────────────┘           └──────────────┘       │
   │                                                    │
   │   ╱906            ╱908                              │
   │  ┌──────────────┐                                  │
   │  │Non-transitory│              900                 │
   │  │     data     │                                  │
   │  │   storage    │           Computer system        │
   │  └──────────────┘                                  │
   └────────────────────────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. SCHAEFER et al.** Context-Aware Scene Prediction Network (CASPNet). *arXiv: 2201.06933v1*, 18 January 2022
- Wayformer: Motion Forecasting via Simple & Efficient Attention Networks. **NAYAKANTI, N. et al.** Arxiv.org. Cornell University Library, 12 July 2022

- Context-aware Scene Prediction Network (CASPNet). **SCHÄFER, M. et al.** 2022 IEEE 25th International Conference on Intelligent Transportation Systems (ITSC). IEEE, 08 October 2022, 3970-3977
- **LEE et al.** Set Transformer: A Framework for Attention-based Permutation-Invariant Neural Networks. *Proceeding of the 36th International Conference on Machine Learning, Long Beach*, 2019